# EUROPÄISCHE PATENTSCHRIFT

(11) **EP 3 558 722 B1**
(45) Veröffentlichungstag und Bekanntmachung des Hinweises auf die Patenterteilung: **13.01.2021**
(21) Anmeldenummer: 17786909.6
(22) Anmeldetag: 19.10.2017
(51) Int. Cl.: B60C 19/00

(54) **FAHRZEUGLUFTREIFEN AUFWEISEND EIN AKUSTIKELEMENT**
VEHICLE PNEUMATIC TYRE HAVING AN ACOUSTIC ELEMENT
PNEU DE VÉHICULE COMPRENANT UN ÉLÉMENT ACOUSTIQUE

(30) Priorität: 20.12.2016 DE 102016225552
(43) Veröffentlichungstag der Anmeldung: 30.10.2019
(73) Patentinhaber: Continental Reifen Deutschland GmbH, 30165 Hannover (DE)
(72) Erfinder: ZEBIAN, Makram, 30175 Hannover (DE); SCHÜRMANN, Oliver, 30855 Langenhagen (DE); ÖZDOGAN, Gültekin, 30419 Hannover (DE)
(74) Vertreter: Finger, Karsten
(86) Internationale Anmeldenummer: PCT/EP2017/076668
(87) Internationale Veröffentlichungsnummer: WO 2018/114086

(56) Entgegenhaltungen:
- EP-A2- 2 433 786
- WO-A1-2007/051232
- WO-A1-2015/092497
- DE-A1-102013 012 827
- DE-A1-102014 206 009

## Beschreibung

### Fahrzeugluftreifen aufweisend ein Akustikelement

Die Erfindung betrifft einen Fahrzeugluftreifen aufweisend zumindest ein Akustikelement, wobei der Fahrzeugluftreifen auf einer Felge montiert mit der Felge einen Reifeninnenraum einschließt,wobei an einer den Reifeninnenraum mitbegrenzenden inneren Reifenoberfläche das Akustikelement aufweisend einen Körper und eine Schicht angeordnet ist,wobei der Körper an der inneren Reifenoberfläche angeordnet ist und wobei an einem dem Reifeninnenraum zugewandten Oberflächenbereich des Körpers eine Schicht angeordnet ist. Weiter betrifft die Erfindung eine Felge aufweisend ein Akustikelement sowie ein Fahrzeugrad aufweisend eine solche Felge und / oder einen solchen Fahrzeugluftreifen.

Bei einem auf einer Fahrbahn abrollenden Fahrzeugluftreifen, welcher luftdicht auf einer Felge montiert ist, entstehen Geräusche durch Vibrationen der Luft im vom Reifen und Felge eingeschlossenen Radinnenraum, welche sowohl in den Fahrgastraum als auch an die Umgebung außerhalb des Fahrzeuges übertragen werden.

Zur Reduzierung solcher Geräusche ist es aus der DE 10 2007 028932 A1 bekannt, einen Schaumstoffring als Dämpfungselement an der Innenseite des Fahrzeugluftreifens anzubringen. Dieses Dämpfungselement reduziert die Luftvibrationen im Radinnenraum, was das Geräuschverhalten des Fahrzeuges verbessert.

Aus der DE 11 2004 001 430 T5 ist ein Fahrzeugluftreifen mit einem bandförmigen Geräusch absorbierenden porösen Material einer Höhe von 15 mm und einer axialen Breite von 150 mm, der an einer inneren Reifenoberfläche unter Verwendung eines elastischen Fixierbandes einer axialen Breite von 30 mm befestigt ist.

Der Einsatz von Material für solche Dämpfungselemente ist allerdings mit hohen Kosten verbunden.

Weiter ist aus der DE 60 2004 009 533 T2 ein Fahrzeugreifen mit Geräuschdämpfern aus einem Polyurethan-Schwamm auf Etherbasis bekannt, wobei der Geräuschdämpfer äußere Beschichtung aufweist, welche durch eine Polyethylenfolie der Dicke 0,06 mm gebildet ist, in welche das schwammartige Material vollständig eingewickelt ist. Das Volumen des Schwamms ist durch die Folie allerdings auch luftdicht gegenüber dem restlichen Reifeninnenraum abgeschlossen, was sowohl die Beständigkeit der Anordnung gegenüber dem Innendruckaufbau bei der Montage des Reifens und gegenüber Innendruckschwankungen beim Betrieb des Reifens als auch die akustischen Eigenschaften des Geräuschdämpfers negativ beeinflusst.

Die EP 2 433 786 A2 offenbart einen Fahrzeugluftreifen aufweisend auf einer inneren Reifenoberfläche ein Akustikelement mit einer geschäumten Struktur und einem Schaumgeräuschdämpfer, wobei gegenüberliegende Oberflächenbereiche des Schaumgeräuschdämpfers luftverbindbar ausgeführt sind.

Die 10 2013 012 827 A1 offenbart eine Felge aufweisend auf ihrer inneren Felgenoberfläche ein Akustikelement aus zwei Schalldämmateriallagen die in radialer Richtung aufeinanderliegend angeordnet sind, wobei die beiden Oberflächenbereiche der radial äußeren Schalldämmateriallage luftverbindbar ausgeführt sind.

Aufgabe der vorliegenden Erfindung ist es, einen Fahrzeugluftreifen zur Verfügung zu stellen, der verbesserte akustische Eigenschaften bei einem geringeren Einsatz von porösem geräuschreduzierenden Material aufweist und dessen Akustikelement beständiger gegenüber Druckänderungen ist.

Die Aufgabe wird gelöst, indem die Schicht an mindestens 15 %, bevorzugt an mindestens 20 %, besonders bevorzugt an mindestens 30%, der dem Reifeninnenraum zugewandten Oberfläche des Körpers angeordnet ist, indem die Schicht einen zur inneren Reifenoberfläche beabstandet angeordneten ersten Oberflächenbereich aufweist, indem der erste Oberflächenbereich mit einem ihm gegenüberliegenden Oberflächenbereich der Schicht luftverbindbar ist und indem die Schicht für eine auf den ersten Oberflächenbereich treffende Schallwelle einen Schall-Reflexionsgrad von mindestens 80 % aufweist, gemessen bei einer Referenzfrequenz f von f = c / ((R + r) · π), wobei R der nominale Reifendurchmesser und r der nominale Felgendurchmesser ist und c = 343 m/s gilt.

Es hat sich herausgestellt, dass ein Fahrzeugluftreifen, der ein solches Akustikelement aufweisend eine Schicht mit einem stark reflektierenden ersten Oberflächenbereich aufweist, im Betrieb eine gleichmäßigere Verteilung des Schalldruckpegels auf die Schallfrequenzen sowie reduzierte Schalldruckpegelspitzen aufweist als ein Reifen ohne solche Akustikelemente. Insbesondere kann der Reifen eine zusätzliche Resonanzfrequenz aufweisen, wobei der Schalldruckpegel bei dieser zusätzlichen Resonanzfrequenz einen höheren Schalldruckpegel aufweist als bei einem Reifen ohne das Akustikelement. Hierdurch steigt der Schalldruckpegel bei der zusätzlichen Resonanzfrequenz an. Gleichzeitig kann sich der Schalldruckpegel bei anderen Frequenzen reduzieren. Als besonders vorteilhaft hat es sich herausgestellt, wenn der erste Oberflächenbereich einen Schall-Reflexionsgrad von mindestens 80 % aufweist. Gemessen wird der Schall-Reflexionsgrad bei einer Referenzfrequenz f, wobei f gegeben ist durch f = c / ((R + r) · π). R ist dabei der nominale Durchmesser des Reifens, r der nominale Durchmesser der Felge und c = 343 m/s. Der Schall-Reflexionsgrad kann gemessen werden für eine senkrecht auf den ersten Oberflächenbereich vom Medium Luft bei Normalbedingungen, d.h. bei einem Luftdruck von 1013,25 hPa und einer Temperatur von 293,15 Kelvin, treffende Schallwelle. Der Schall-Reflexionsgrad kann gemessen werden gemäß DIN EN ISO 10534-2. Die akustischen Eigenschaften des Körpers sind hierbei ganz oder weitgehend unberücksichtigt.

Durch die gleichmäßigere Verteilung des Schalldruckpegels auf die Schallfrequenzen, insbesondere durch die zusätzliche Resonanzfrequenz, erfolgt also zumindest teilweise eine Umverteilung des Schalldruckpegels. Bedeutend ist dabei, dass hierdurch der Schalldruckpegel bei der oder den ursprünglichen Resonanzen des Reifens, also den Resonanzen eines Reifens ohne ein solches Akustikelement, reduziert ist. Insbesondere ist der maximale Wert eines Schalldruckpegels, den ein solcher Reifen aufweist, reduziert. Ein solcher Reifen weist somit verbesserte akustische Eigenschaften auf, ohne dass der Einsatz von kostenintensivem porösem Material, das zur Geräuschminderung geeignet ist, nötig ist.

Ein im Reifeninnenraum angeordneter Körper beeinflusst die Reifeneigenschaften wie Rundlauf, Rollwiderstand etc. In der Regel ist es für solche Eigenschaften vorteilhaft, wenn der Materialeinsatz von im Reifeninnenraum angeordneten Elementen gering gehalten ist. Als besonders effizient für das Verhältnis aus Geräuschreduktion und Materialeinsatz, v.a. für den Körper, hat es sich herausgestellt, wenn die Schicht an mindestens 15 %, bevorzugt an mindestens 20 %, besonders bevorzugt an mindestens 30%, der dem Reifeninnenraum zugewandten Oberfläche des Körpers angeordnet ist. Bevorzugt ist dabei mindestens 90 % der dem Reifeninnenraum zugewandten Oberfläche der Schicht als erster Oberflächenbereich ausgebildet. Die Schicht kann zusammenhängend oder durch zwei oder mehr voneinander beabstandete Teilstücke gebildet sein. Jedes Teilstück weist dann einen ersten Oberflächenbereich und einen zweiten Oberflächenbereich auf. Die Schicht kann dabei ganz oder teilweise stoffschlüssig mit dem Körper verbunden sein.

Gegenüberliegend bedeutet, dass der erste Oberflächenbereich und der ihm gegenüberliegende Oberflächenbereich der Schicht mit einer senkrecht zu beiden Oberflächenbereichen stehenden innerhalb der Schicht verlaufenden Linie verbindbar sind.

"Luftverbindbar" bedeutet im Zuge der Erfindung, dass eine luftdurchgängige Verbindung zwischen dem ersten Oberflächenbereich und dem ihm gegenüberliegenden Oberflächenbereich der Schicht existiert, wodurch Luft vom ersten Oberflächenbereich zum ihm gegenüberliegenden Oberflächenbereich gelangen kann. Hierdurch ist ein Luftaustausch als auch ein Druckausgleich zwischen den an die beiden Oberflächenbereiche angrenzenden Volumina ermöglicht. Der Körper oder weitere, von der Schicht verschiedene, Elemente des Akustikelements sind hierbei unberücksichtigt. Eine solche luftdurchgängige Verbindung kann geschaffen sein durch eine luftdurchgängige Öffnung in der Schicht und / oder eine Permeabilität der Schicht gegenüber Luft und / oder eine Anordnung der Schicht, die eine luftdurchgängige Verbindung der beiden Oberflächenbereiche um ein freies Ende der Schicht herum aufweist. In diesem Fall weist die Schicht ein freies Ende auf. Die beiden Oberflächenbereiche der Schicht sind somit in einem Bereich der Schicht angeordnet, der keinen vollständig geschlossenen Raum einschließt.

Hierdurch ist ein Luftaustausch als auch ein Druckausgleich zwischen den an die beiden Oberflächenbereiche angrenzenden Volumina ermöglicht. Beim Befüllen des Reifens mit Luft sind somit keine gesonderten Vorkehrungen zu treffen. Das Volumen des Akustikelements ist weitgehend unabhängig vom Innendruck des Reifens und von üblichen im Betrieb des Reifens auftretenden Schwankungen des Innendrucks des Reifens. Auch die Anordnung und damit die Reflexionseigenschaften des ersten Oberflächenbereichs und/oder des zweiten Oberflächenbereichs sind weitgehend unabhängig von Innendruckschwankungen des Reifens.

Ein solches Akustikelement ist somit sowohl in seiner Haltbarkeit als auch in seinen akustischen Eigenschaften beständiger gegenüber Druckänderungen, insbesondere gegenüber Innendruckschwankungen des Reifens.

Hierdurch ist ein Fahrzeugluftreifen zur Verfügung gestellt, der verbesserte akustische Eigenschaften bei einem geringeren Einsatz an porösem geräuschreduzierenden Material aufweist und dessen Akustikelement sowie die akustischen Eigenschaften des Akustikelements beständiger gegenüber Druckänderungen sind.

Das oder die Akustikelemente können dabei auf einer einem Laufstreifen eines Fahrzeugluftreifens gegenüberliegenden inneren Reifenoberfläche angeordnet sein. Die Schicht kann ganz oder teilweise beabstandet zur inneren Reifenoberfläche angeordnet sein.

In einer ersten Ausführungsform weist die Schicht einen ersten Oberflächenbereich auf, der dem Reifeninnenraum zugewandt angeordnet ist und / oder einen ersten Oberflächenbereich auf, der dem Körper zugewandt angeordnet ist. Je nach Anordnung wird der Schall bevorzugt in den Reifeninnenraum zurückgeworfen oder zum Körper zurückreflektiert. Bevorzugt ist auch der gegenüberliegende Oberflächenbereich ein erster Oberflächenbereich.

In einer weiteren Ausführungsform weist die Schicht für eine auf den ersten Oberflächenbereich treffende Schallwelle der Referenzfrequenz f einen Schall-Reflexionsgrad von mindestens 90 %, bevorzugt von mindestens 95 %, besonders bevorzugt von mindestens 99 %, auf. Ein so hoher Reflexionsgrad ermöglicht eine besonders gute Reduktion von Schalldruckpegelspitzen.

In einer weiteren Ausführungsform weist das Akustikelement zumindest im Bereich des ersten Oberflächenbereichs eine Schallkennimpedanz von 0,8·10⁶ Ns/m³ bis 18·10⁶ Ns/m³, bevorzugt von 11·10⁶ Ns/m³ bis 18·10⁶ Ns/m³, auf. Die Schallkennimpedanz ist ein Maß für den Wellenwiderstand, den ein Medium einem auf das Medium einwirkenden Schall entgegensetzt. Die Schallkennimpedanz Z ist dabei definiert als Z = (ρ·G)^{1/2}.ρ ist die Dichte bei Normalbedingungen, G ist das Schubmodul. Das Schubmodul kann gemessen sein gemäß DIN ISO 1827. Bei einem solchen Akustikelement ist bei einem Auftreffen einer Schallwelle auf den ersten Oberflächenbereich die Position der Schicht zumindest im Bereich des ersten Oberflächenbereichs durch den Schalldruck veränderbar, wodurch Schallenergie absorbiert werden kann.

Im Zuge der Erfindung umfasst die Formulierung "im Bereich des ersten Oberflächenbereichs" einen die gesamte Schichtdicke umfassenden Bereich der Schicht, wobei der Bereich zumindest den ersten Oberflächenbereich aufweist.

Entsprechende Vorteile ergeben sich, wenn die Schicht zumindest im Bereich des ersten Oberflächenbereichs eine Schallkennimpedanz von 0,8·10⁶ Ns/m³ bis 18·10⁶ Ns/m³, bevorzugt von 11·10⁶ Ns/m³ bis 18·10⁶ Ns/m³, aufweist.

Es hat sich herausgestellt, dass eine Schallkennimpedanz Z des Akustikelements und/oder der Schicht im Bereich des ersten Oberflächenbereichs von 0,8·10⁶ Ns/m³ bis 18·10⁶ Ns/m³ wesentlich und ursächlich für eine effiziente Geräuschminderung ist. Vorteilhaft ist eine Schallkennimpedanz von 0,8·10⁶ Ns/m³ bis 6·10⁶ Ns/m³ und / oder eine Schallkennimpedanz zwischen 6·10⁶ Ns/m³ und 11·10⁶ Ns/m³ und / oder eine Schallkennimpedanz von 11·10⁶ Ns/m³ bis 18·10⁶ Ns/m³.

Als wichtig hat es sich auch herausgestellt, dass bei einem solchen Akustikelement die Schallkennimpedanz weitgehend unabhängig von Innendruckschwankungen des Rades ist. Die Schallkennimpedanz ist insbesondere unabhängiger von Innendruckschwankungen des Rades als bei einem Akustikelement mit einer Schicht, die den gesamten Körper luftdicht umgibt.

In einer vorteilhaften Ausführungsform weist die Schicht zumindest im Bereich des ersten Oberflächenbereichs eine Biegesteifigkeit von 100 Nm bis 6000 Nm, bevorzugt eine Biegesteifigkeit von 1000 Nm bis 6000 Nm, auf. Die Biegesteifigkeit ist gegeben durch E·h³/(12·(1-µ²)). Der Elastizitätsmodul E kann gemessen sein gemäß DIN EN ISO 6721-1 bis 6721-3. Die Querdehnzahl µ kann gemessen sein gemäß DIN EN ISO 527-1. h bezeichnet die Dicke der Schicht. Eine solche Schicht eignet sich hervorragend als Masse eines Membranabsorbers zur Schallabsorption. Auch hierbei kommt es zu einer Geräuschabsorption durch Positionsveränderung des ersten Oberflächenbereichs.

Vorteilhaft ist es auch, wenn das Akustikelement bei einer Krafteinwirkung senkrecht auf den ersten Oberflächenbereich eine Federkonstante von 100 N/m bis 20000 N/m aufweist. Im Zusammenspiel mit der vorgenannten Masse ergibt sich hierdurch ein Membranabsorber, der sich noch besser zur Schallabsorption eignet. Zweckmäßig ist es dabei, wenn der Körper bei einer Krafteinwirkung aus einer Richtung senkrecht zum ersten Oberflächenbereich eine Federkonstante von 100 N/m bis 1000 N/m und/oder eine Federkonstante zwischen 1000 N/m und 8000 N/m und / oder eine Federkonstante von 8000 N/m bis 20000 N/m aufweist. Durch die geeignete Kombination aus Masse und Federkonstante lässt sich beispielsweise die bevorzugt absorbierte Frequenz einstellen.

In einer weiteren Ausführungsform weist die Schicht zumindest im Bereich des ersten Oberflächenbereichs eine Biegesteifigkeit von 6·10⁻⁶ Nm bis 1·10⁻² Nm, bevorzugt von 6·10⁻⁶ Nm bis 1·10⁻⁴ Nm, auf. Vom Schall verursachte Positionsänderungen innerhalb des jeweiligen Oberflächenbereichs können bei einer solch geringen Biegesteifigkeit innerhalb der Erstreckung des ersten Oberflächenbereichs lokal unterschiedlich ausfallen. Auch hierdurch ist eine effiziente Geräuschabsorption ermöglicht.

Auch eine Biegesteifigkeit der Schicht zumindest im Bereich des ersten Oberflächenbereichs zwischen 1·10⁻²Nm und 100 Nm, bevorzugt zwischen 1 Nm und 10 Nm, hat sich als vorteilhaft herausgestellt.

In einer vorteilhaften Ausführungsform schließen alle Normalenvektoren des ersten Oberflächenbereichs einen Winkel kleiner als 90°, bevorzugt einen Winkel von 0° bis 45°, besonders bevorzugt einen Winkel von 0° bis 30°, mit der radialen Richtung ein. Vorteilhaft ist es auch, wenn alle Normalenvektoren des ersten Oberflächenbereichs einen Winkel von 0° bis 10°, bevorzugt von 0° bis 5° mit der radialen Richtung einschließen.

Zweckmäßig ist es dabei, wenn alle Normalenvektoren des ersten Oberflächenbereichs eine nach radial innen orientierte Komponente aufweisen. Das radial außerhalb eines solchen Oberflächenbereichs aufweisend einen hohen Reflexionsgrad liegende Volumen des Reifeninnenraums trägt vermindert zu einer Raummode bei der zusätzlichen Resonanzfrequenz bei, wodurch eine Umverteilung des Schalldruckpegels zu höheren Frequenzen begünstigt ist.

Zweckmäßig ist es aber auch, wenn alle Normalenvektoren des ersten Oberflächenbereichs eine nach radial außen orientierte Komponente aufweisen. Das radial innerhalb eines solchen Oberflächenbereichs aufweisend einen hohen Reflexionsgrad liegende Volumen des Reifeninnenraums trägt somit vermindert zu einer Raummode bei der zur zusätzlichen Resonanzfrequenz bei, wodurch eine Umverteilung des Schalldruckpegels zu tieferen Frequenzen begünstigt ist.

Als vorteilhaft hat es sich erwiesen, wenn alle Normalenvektoren des ersten Oberflächenbereichs einen Winkel von 0° bis 45°, bevorzugt von 0° bis 30°, besonders bevorzugt von 0° bis 10°, mit der axialen Richtung oder der Umfangrichtung einschließen.

In einer besonders bevorzugten Ausführungsform weist das Akustikelement ein Dämpfungselement, welches aus einem porösen Material, bevorzugt aus einem Schaumstoff, ausgebildet und zur Minderung von Geräuschen geeignet ist, auf. Hierdurch ermöglicht das Akustikelement eine weitere Minderung des Schalls. Dies kann durch Absorption von Schall durch das poröse Material des Dämpfungselements erfolgen.

Zweckmäßig ist es, wenn der Körper das Dämpfungselement aufweist oder durch das Dämpfungselement gebildet ist oder wenn das Dämpfungselement am ersten Oberflächenbereich angeordnet ist oder wenn das Dämpfungselement am ersten Oberflächenbereich angeordnet ist und alle Normalenvektoren eine nach radial innen orientierte Komponente aufweisen. Hierdurch ist eine noch effizientere Geräuschminderung bei einfachem Aufbau des Akustikelements ermöglicht.

Zweckmäßig ist es weiter, wenn das Dämpfungselement mittels eines Haftmittels fest mit der Reifenoberfläche verbunden ist.

Bei dem porösen Material kann es sich um Standard **ContiSilent**®-Schaum handeln und/oder beispielsweise Polyurethan oder Polyester mit einer Dichte von 20 kg/m³ bis 85 kg/m³ und einer Härte von 3,5 kilo-pascal bis 10 kilo-pascal. Weitere mögliche poröse Materialien weisen eine Mischung aus Polyurethan und/oder Polyester und/oder Polyether, oder Polyurethanschäume auf einer Polyetherbasis oder einer Polyesterbasis auf, und/oder sie weisen eine beliebige, schallabsorbierende Materialienmischung, beispielsweise Glas- oder Steinwolle, Schlingenware oder Hochflor oder Vliesmaterialien oder Kork auf. Weitere mögliche poröse Materialien, die sich für die Nutzung als Dämpfungselement eignen, sind beispielsweise ein Melaminharzschaum oder ein Bauschaum. Ferner weist das Material des Dämpfungselementes insbesondere eine Dichte von beispielsweise bis zu 100 kg/m³ und/oder eine Stauchhärte von beispielswiese 1,5 kilo-pascal auf.

Bei dem Haftmittel kann es sich um ein Dichtmittel und / oder ein Klebemittel handeln. Bei Anbringung eines Dämpfungselements an der Reifenoberfläche handelt es sich bevorzugt um ein Dichtmittel, besonders bevorzugt um ein selbsttätig abdichtendes Dichtmittel. Bei Anbringung eines Dämpfungselements an der Felgenoberfläche handelt es sich bevorzugt um Klebemittel.

Bei dem Dichtmittel handelt es sich insbesondere um ein Polyurethan-Gel oder um eine Butylkautschukbasiertes Dichtmittel. Bevorzugt handelt es sich um ein Butylkautschukbasiertes Dichtmittel in Kombination mit einem Klebemittel. Bei dem Klebemittel kann es sich um ein Klebeband und/oder einen silikonbasierten Kleber und/oder einen Zwei-Komponenten-Kleber und/oder einen Baukleber und/oder einen Polyurethan-Kleber und/oder einen kautschukbasierten Kleber und/oder einen Reifenreparaturkleber und/oder einen Sekundenkleber und/oder einen Kleber basierend auf Cyanacrylat und/oder basierend auf einem wasserbasierten Acryl-System mit einer Polyethylenterephthalat-Struktur und/oder basierend auf Acryl-Nitril-Butadien-Kautschuk in Verbindung mit einem in Aceton gelösten Formaldehyd-Harz und/oder basierend auf einem Silan-Polyether und/oder basierend auf einem mit Butyl-Kautschuk vernetzten Polybuten und/oder basierend auf einem Alkoxy-Silikon handeln.

Vorteilhaft ist es, wenn der Körper einen von Kanten begrenzten, dem Reifeninnenraum zugewandten Oberflächenbereich aufweist und wenn an dem Oberflächenbereich die Schicht angeordnet ist. Die Schicht kann sich dabei über den gesamten Oberflächenbereich oder nur einen Teil des Oberflächenbereichs erstrecken. Die Schicht kann sich auch über die Kanten des Oberflächenbereichs hinaus erstrecken. Die Schicht kann ganz oder teilweise beabstandet zu den Kanten des Oberflächenbereichs angeordnet sein. Teilweise beabstandet bedeutet hierbei, dass die Schicht nicht zu allen Kanten beabstandet angeordnet ist.

Zweckmäßig ist es, wenn das Dämpfungselement eine Anzahl an N durch Kanten voneinander abgegrenzte dem Reifeninnenraum zugewandte Oberflächenbereiche aufweist, wobei an 1 bis N-1 Oberflächenbereiche der insgesamt N Oberflächenbereiche des Dämpfungselements die Schicht angeordnet ist. Beispielsweise kann das Dämpfungselement als Quader ausgebildet sein und mit einer Seite an der Reifeninnenfläche angebracht sein. Es verbleiben somit 5 durch Kanten voneinander abgetrennte dem Reifeninnenraum zugewandte Oberflächenbereiche. Hierbei kann an 1, 2, 3 oder 4 der Oberflächenbereiche die Schicht angeordnet sein.

Vorteilhaft ist es auch, wenn das Dämpfungselement oder der Körper eine durchgängige Öffnung aufweist und wenn an der die Öffnung auskleidenden Oberfläche die Schicht angeordnet ist.

Die geometrische Form des Dämpfungselements oder des Körpers kann sich in radialer Richtung oder entgegen der radialen Richtung verjüngen oder konstant bleiben. Es kann sich beispielsweise um einen Quader, eine Pyramide, einen Pyramidenstumpf, einen umgedrehten Pyramidenstumpf, ein Parallelepiped oder einen allgemeinen Zylinder handeln. Es kann sich auch um eine senkrechte oder eine schiefe dreidimensionale Form handeln.

Vorteilhaft ist es, wenn die Schicht eine Schichtdicke von 0,01 mm bis 20 mm aufweist. Sowohl Schichten mit einer geringen Schichtdicke von 0,01 mm bis 5 mm als auch Schichten mit einer mittleren Schichtdicke zwischen 5 mm und 12 mm als auch Schichten mit einer größeren Schichtdicke von 12 mm bis 20 mm haben sich als geeignet und vorteilhaft herausgestellt.

Die Schicht kann luftdurchlässig oder luftundurchlässig ausgeführt sein. Die Schicht kann wasserdicht oder wasserdurchlässig ausgeführt sein.

Die Schicht ist ganz oder teilweise an der Oberfläche des Körpers angeordnet.

Die Schicht kann dabei ausgewählt sein aus der Gruppe welche gebildet ist durch eine Kunststofffolie, eine Metallfolie, bevorzugt eine Aluminiumfolie, eine gewebeverstärkte Membran, eine Schicht aufweisend Naturmaterialien, eine Schicht aufweisend Kohlefasern, eine Schicht aufweisend Aramid, eine ausgehärtete Beschichtung, ein Lack eine Schicht aus Gummi, bevorzugt eine Schicht aus Moosgummi, eine Beschichtung der Oberfläche des Körpers und eine unbehandelte Außenfläche des Körpers. Solche Schichten weisen hervorragende Reflexionseigenschaften auf.

Die Schicht kann als vom Körper verschiedenes Element des Akustikelements, bevorzugt als eine Folie, ausgeführt sein. Dabei kann die Schicht mittels eines Haftmittels mit dem Körper verbunden sein. Die Schicht kann Naturmaterialien wie Kork oder ein Harz, bevorzugt ein Harz auf Epoxidharzbasis, oder Kohlefasern oder Aramid aufweisen.

Die Schicht kann die Oberfläche des Körpers bilden oder mitbilden. Die Schicht kann auch eine unbehandelte Außenfläche des Körpers, bevorzugt eine unbehandelte Außenfläche des porösen Materials des Dämpfungselements, sein. Die Schicht kann die Verhautung des Schaumstoffs des Dämpfungselements, welche beim Schäumen entsteht, sein. Hierdurch ist ein effizientes Akustikelement mit einfachem Aufbau geschaffen. Die Beschichtung kann flüssig auf das Dämpfungselement aufgetragen und dann ausgehärtet sein. Die unbehandelte Außenfläche kann die unbehandelte Außenfläche des porösen Materials des Dämpfungselements nach dem Produktionsprozess des porösen Materials sein. Es handelt sich somit nicht um eine Schnittfläche. Es handelt sich beispielsweise um die natürliche Oberfläche eines Schaumstoffs.

Zweckmäßig ist es, wenn der Körper des Akustikelements in Umfangrichtung geschlossen ausgebildet ist. Vorteilhaft ist es, wenn der erste Oberflächenbereich in Umfangsrichtung geschlossen ausgebildet ist. Hierdurch ergibt sich eine sehr einfache Ausführung mit guten Uniformityeigenschaften.

Der erste Oberflächenbereich kann sich aber auch nur über einen Teilbereich des Umfangs des Reifens erstrecken. Zweckmäßig ist es weiter, wenn das Akustikelement mehrere erste Oberflächenbereiche, die dem Reifeninnenraum zugewandt angeordnet sind, aufweist. Zweckmäßig ist es auch, wenn das Akustikelement mehrere erste Oberflächenbereiche, die dem Körper zugewandt angeordnet sind, aufweist. Die genannten Oberflächenbereiche können alle der gleichen Schicht oder mehreren voneinander beabstandet angeordneten Schichten zugeordnet sein.

Für eine effiziente Umverteilung des Schalldruckpegels ist es vorteilhaft, wenn über den Umfang des Reifens verteilt zwei, drei oder mehrere Akustikelemente angeordnet sind. Hierdurch ist im Vergleich zu einem Umfangenden Element Material eingespart. Die Akustikelemente können alle gleich oder zumindest teilweise voneinander verschieden ausgebildet sein. Sie können sich beispielsweise in ihrer Größe oder Geometrie voneinander unterscheiden. Zumindest zwei Akustikelemente können in ihrer axialen Ausdehnung beabstandet oder überlappend angeordnet sein.

Zweckmäßig ist es, wenn der Fahrzeugluftreifen ein oder mehrere weitere Dämpfungselemente aufweist.

Das erfindungsgemäße Akustikelement kann auch auf einer Felge und/oder anstelle auf der Reifeninnenfläche auf einer Felge angeordnet sein. Dabei kann das erfindungsgemäße Akustikelement hinsichtlich sämtlicher Ausgestaltungsformen, die in der Beschreibung offenbart sind und entsprechend der Beschreibung auf der Reifeninnenfläche angeordnet sind, auf der den Reifeninnenraum begrenzenden inneren Oberfläche der Felge angeordnet sein.

Die axiale Richtung, die radiale Richtung und die Umfangrichtung des Luftreifens fallen mit einer axialen Richtung, einer radialen Richtung und einer Umfangrichtung der Felge zusammen.

Die Erfindung betrifft somit insbesondere auch eine Felge aufweisend zumindest ein Akustikelement, wobei ein auf der Felge montierter Fahrzeugluftreifen mit der Felge einen Reifeninnenraum einschließt,
- wobei an einer den Reifeninnenraum mitbegrenzenden inneren Felgenoberfläche ein Akustikelement aufweisend einen Körper und eine Schicht angeordnet ist,
- wobei der Körper an der inneren Felgenoberfläche angeordnet ist und
- wobei an einem dem Reifeninnenraum zugewandten Oberflächenbereich des Körpers eine Schicht angeordnet ist,
- wobei die Schicht an mindestens 15 %, bevorzugt auf mindestens 20 %, besonders bevorzugt auf mindestens 30%, der dem Reifeninnenraum zugewandten Oberfläche des Körpers angeordnet ist,
- wobei die Schicht einen zur inneren Felgenoberfläche beabstandet angeordneten ersten Oberflächenbereich aufweist,
- wobei der erste Oberflächenbereich mit einem ihm gegenüberliegenden Oberflächenbereich der Schicht luftverbindbar ist und
- wobei die Schicht für eine auf den ersten Oberflächenbereich treffende Schallwelle einen Schall-Reflexionsgrad von mindestens 80 % aufweist, gemessen bei einer Referenzfrequenz f von f = c / ((R + r) . π), wobei R der nominale Reifendurchmesser und r der nominale Felgendurchmesser ist und c = 343 m/s gilt.

Als besonders vorteilhaft hat es sich dabei herausgestellt, wenn das Akustikelement ein Dämpfungselement, welches aus einem porösen Material ausgebildet und zur Minderung von Geräuschen geeignet ist, aufweist.

Weiter betrifft die Erfindung ein Fahrzeugrad mit einer Felge und einem auf der Felge montierten Fahrzeugluftreifen, wobei Felge und/oder Fahrzeugluftreifen erfindungsgemäß zumindest ein Akustikelement aufweisen.

Es kann sich um ein Rad, einen Reifen oder eine Felge für einen Personenkraftwagen, einen Van, ein SUV, einen Light-Truck, ein Nutzfahrzeug, ein Kraftrad oder einen Bus handeln.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen radialen Teilquerschnitt durch ein erfindungsgemäßes Fahrzeugrad aufweisend zumindest ein Akustikelement gemäß der Erfindung;
Fig. 2 einen radialen Teilquerschnitt durch ein erfindungsgemäßes Fahrzeugrad aufweisend zumindest ein Akustikelement gemäß der Erfindung und
Fig. 3 erfindungsgemäße Akustikelemente.

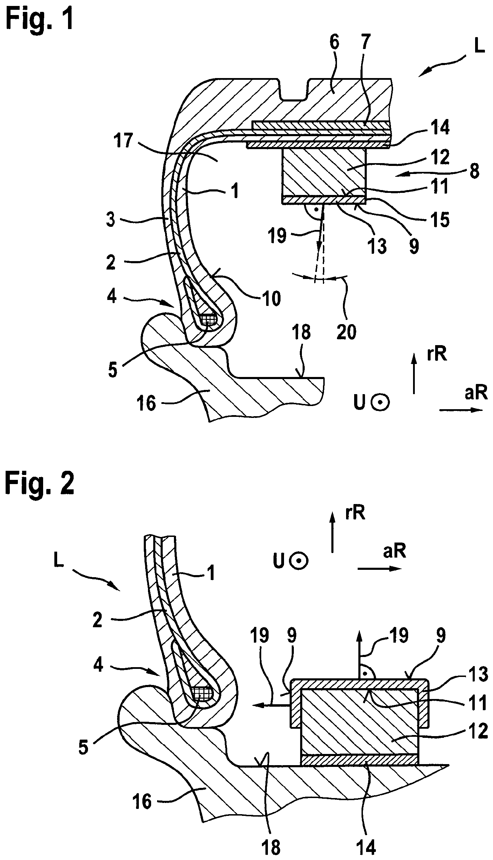

Die Figur 1 zeigt einen radialen Teilquerschnitt durch ein Fahrzeugrad mit einer Felge 18 und einem auf der Felge 18 montierten Fahrzeugluftreifen L in Radialbauart. Die wesentlichen Bauteile, aus welchen sich der dargestellte Fahrzeugluftreifen L zusammensetzt, sind eine weitgehend luftundurchlässige Innenschicht 1, eine zumindest eine Verstärkungslage aufweisende Karkasse 2, die in herkömmlicher Weise vom Zenitbereich des Fahrzeugluftreifens L über die Seitenwände 3 bis in die Wulstbereiche 4 reicht und dort durch Umschlingen zugfester Wulstkerne 5 verankert ist, einen radial außerhalb der Karkasse 2 befindlichen profilierten Laufstreifen 6 und einen zwischen dem Laufstreifen 6 und der Karkasse 2 angeordneten mehrlagigen Gürtelverband 7. Es kann sich hierbei um ein Rad für einen Personenkraftwagen oder für ein Nutzfahrzeug handeln.

Der erfindungsgemäße Reifen L kann luftdicht auf einer Felge 16 montiert werden. Die Felge kann ein- oder mehrstückig ausgebildet sein. Der durch Felge und Reifen eingeschlossene Raum wird als Reifeninnenraum 17 bezeichnet, die den Reifeninnenraum 17 begrenzende Oberfläche als innere Reifenoberfläche 10 bzw. als innere Felgenoberfläche 18.

An der dem Laufstreifen 6 gegenüberliegenden radial inneren Reifenoberfläche 10 ist ein Akustikelement 8 aufweisend einen Körper 12 und eine Schicht 13 angeordnet. Der Körper 12 ist an der inneren Reifenoberfläche 10 angeordnet und mit dieser mittels eines Haftmittels 14 verbunden.

An einem dem Reifeninnenraum 17 zugewandten Oberflächenbereich des Körpers 12 ist eine Schicht 13 angeordnet. Die Schicht 13 ist dabei an mindestens 15 %, bevorzugt an mindestens 20 %, besonders bevorzugt an mindestens 30%, der dem Reifeninnenraum 17 zugewandten Oberfläche des Körpers 12 angeordnet.

Die Schicht 13 weist einen dem Reifeninnenraum 17 zugewandten und zur inneren Reifenoberfläche 10 beabstandet angeordneten ersten Oberflächenbereich 9 auf. Die Schicht 13 weist auch einen dem ersten Oberflächenbereich 9 gegenüberliegenden Oberflächenbereich 11 auf. Die beiden Oberflächenbereiche 9, 11 können mit einer senkrecht zu beiden Oberflächenbereichen 9, 11 stehenden innerhalb der Schicht 13 verlaufenden Linie verbunden werden.

Der erste Oberflächenbereich 9 ist mit dem gegenüberliegenden Oberflächenbereich 11 der Schicht luftverbindbar. Im dargestellten Fall weist die Schicht 13 hierfür eine Anordnung auf, die eine luftdurchgängige Verbindung der beiden Oberflächenbereiche 9, 11 um ein freies Ende 15 der Schicht 13 herum aufweist. Die beiden Oberflächenbereiche 9, 11 der Schicht 13 sind somit in einem Bereich der Schicht angeordnet, der keinen vollständig geschlossenen Raum einschließt. Eine solche luftdurchgängige Verbindung kann auch geschaffen sein durch eine luftdurchgängige Öffnung in der Schicht 13 und / oder eine Permeabilität der Schicht 13 gegenüber Luft.

Der erste Oberflächenbereich 9 der Schicht 13 weist einen Schall-Reflexionsgrad von mindestens 80 % auf, gemessen bei einer Referenzfrequenz f von f = c / ((R + r) · π) und Normalbedingungen gemäß DIN EN ISO 10534-2, wobei R der nominale Reifendurchmesser und r der nominale Felgendurchmesser ist und c = 343 m/s gilt. Der Schall-Reflexionsgrad kann mindestens 90 %, bevorzugt mindestens 95 %, besonders bevorzugt mindestens 99 %, betragen.

Die Schicht 13 weist einen ersten Oberflächenbereich 9 auf, der dem Reifeninnenraum 17 zugewandt angeordnet ist. Der gegenüberliegende Oberflächenbereich 11 ist dem Körper 12 zugewandt angeordnet. Auch der gegenüberligende Oberflächenbereich 11 kann als erster Oberflächenbereich mit einem entsprechenden Reflexionsgrad ausgeführt sein.

Die Schicht 13 weist zumindest im Bereich des ersten Oberflächenbereichs 9 eine Schallkennimpedanz von 0,8·10° Ns/m³ bis 18·10⁶ Ns/m³, bevorzugt von 11·10⁶ Ns/m³ bis 18·10⁶ Ns/m³, auf.

Die Schicht 13 weist zumindest im Bereich des ersten Oberflächenbereichs eine Biegesteifigkeit von 100 Nm bis 6000 Nm sowie eine Federkonstante von 100 N/m bis 20000 N/m auf. Die Schicht 13 kann aber auch zumindest im Bereich des ersten Oberflächenbereichs eine Biegesteifigkeit von 6·10⁻⁶ Nm bis 1·10⁻² Nm sowie eine Federkonstante von 100 N/m bis 20000 N/m aufweisen.

Alle Normalenvektoren 19 des ersten Oberflächenbereichs 9 und des gegenüberliegenden Oberflächenbereichs 11 schließen einen Winkel 20 kleiner als 90°, bevorzugt einen Winkel 20 von 0° bis 10°, bevorzugt von 0° bis 5°, mit der radialen Richtung rR ein. Alle Normalenvektoren 19 des ersten Oberflächenbereichs 9 weisen eine nach radial innen orientierte Komponente auf. Alle Normalenvektoren 19 des gegenüberliegenden Oberflächenbereichs 11 weisen eine nach radial außen orientierte Komponente auf. Alle Normalenvektoren 19 des ersten Oberflächenbereichs 9 sind in eine Richtung orientiert und alle Normalenvektoren 19 des gegenüberliegenden Oberflächenbereichs 11 sind in die dazu entgegengesetzte Richtung orientiert.

Das Akustikelement 8 weist ein Dämpfungselement, welches aus einem porösen Material ausgebildet und zur Minderung von Geräuschen geeignet ist, auf. Dabei ist der Körper 12 durch das Dämpfungselement gebildet. Das Dämpfungselement ist mittels eines Haftmittels 14, bevorzug mittels eines selbsttätig abdichtenden Dichtmittels, mit der inneren Reifenoberfläche 10 verbunden. Bei dem porösen Material kann es sich um einen Schaumstoff handeln. Von radial außen nach radial innen ist die Abfolge an Elementen gegeben durch: Innere Reifenoberfläche 10, Haftmittel 14, Dämpfungselement 12, Schicht 13.

Der Körper 12 weist einen von Kanten 21 begrenzten, dem Reifeninnenraum 17 zugewandten Oberflächenbereich auf, an welchem die Schicht 13 angeordnet ist.

Die Schicht 13 weist eine Schichtdicke von 0,01 mm bis 20 mm auf. Die Schichtdicke ist die Länge der radialen Erstreckung. Sowohl Schichten mit einer geringen Schichtdicke von 0,01 mm bis 5 mm als auch Schichten mit einer mittleren Schichtdicke zwischen 5 mm und 12 mm als auch Schichten mit einer größeren Schichtdicke von 12 mm bis 20 mm haben sich als geeignet und vorteilhaft herausgestellt. Die Schicht 13 kann luftdurchlässig oder luftundurchlässig ausgeführt sein. Die Schicht 13 kann wasserdicht oder wasserdurchlässig ausgeführt sein.

Die Schicht 13 kann dabei ausgewählt sein aus der Gruppe welche gebildet ist durch eine Kunststofffolie, eine Metallfolie, bevorzugt eine Aluminiumfolie, eine gewebeverstärkte Membran, eine Schicht aufweisend Naturmaterialien, eine Schicht aufweisend Kohlefasern, eine Schicht aufweisend Aramid, eine ausgehärtete Beschichtung, ein Lack eine Schicht aus Gummi, bevorzugt eine Schicht aus Moosgummi, eine Beschichtung der Oberfläche des Körpers und eine unbehandelte Außenfläche des Körpers. Solche Schichten weisen hervorragende Reflexionseigenschaften auf.

Die Schicht 13 ist als vom Körper 12 verschiedenes Element des Akustikelements 8, bevorzugt als eine Folie, ausgeführt. Dabei kann die Schicht 13 mittels eines Haftmittels mit dem Körper 12 verbunden sein. Die Schicht 13 kann Naturmaterialien, bevorzugt Kork oder ein Harz, bevorzugt ein Harz auf Epoxidharzbasis, oder Kohlefasern oder Aramid aufweisen.

Die Schicht 13 kann die Oberfläche des Körpers 12 bilden oder mitbilden. Die Schicht 13 kann auch eine unbehandelte Außenfläche des Körpers 12, bevorzugt eine unbehandelte Außenfläche des porösen Materials des Dämpfungselements, sein. Die Schicht 13 kann die Verhautung des Schaumstoffs des Dämpfungselements, welche beim Schäumen entsteht, sein. Hierdurch ist ein effizientes Akustikelement mit einfachem Aufbau geschaffen. Die Beschichtung kann flüssig auf das Dämpfungselement aufgetragen und dann ausgehärtet sein. Die unbehandelte Außenfläche kann die unbehandelte Außenfläche des porösen Materials des Dämpfungselements nach dem Produktionsprozess des porösen Materials sein. Es handelt sich somit nicht um eine Schnittfläche. Es handelt sich beispielsweise um die natürliche Oberfläche eines Schaumstoffs.

In der dargestellten Ausführungsform kann der Körper 12 und / oder der erste Oberflächenbereich 9 in Umfangsrichtung U geschlossen ausgebildet sein. Der erste Oberflächenbereich 9 kann sich aber auch nur über einen Teilbereich des Umfangs des Reifens erstrecken. Der erste Oberflächenbereich 9 kann sich aber auch nur über einen Teilbereich des Umfangs des Reifens L erstrecken. Das Akustikelement 8 kann mehrere erste Oberflächenbereiche 9 , die dem Reifeninnenraum 17 zugewandt angeordnet sind, aufweisen. Das Akustikelement 8 kann auch mehrere erste Oberflächenbereiche 9 , die dem Körper 12 zugewandt angeordnet sind, aufweisen. Die genannten Oberflächenbereiche 9 können alle der gleichen Schicht 13 oder mehreren voneinander beabstandet angeordneten Schichten 13 zugeordnet sein.

Der Reifen L kann auch mehrere Akustikelemente 8 und / oder Dämpfungselemente aufweisen.

Die Figur 2 zeigt einen Teilquerschnitt eines Fahrzeugrades, wobei an der inneren Oberfläche 18 der Felge 16 ein Akustikelement 8 aufweisend eine oder mehrere erste Oberflächen 9 angeordnet ist. Das Akustikelement 8 kann entsprechend dem in der Figur 1 beschrieben Akustikelement 8 ausgeführt sein. Das zumindest eine Akustikelement 8 ist mittels eines Haftmittels 14 haftend an der inneren Oberfläche 18 der Felge 16 angebracht.

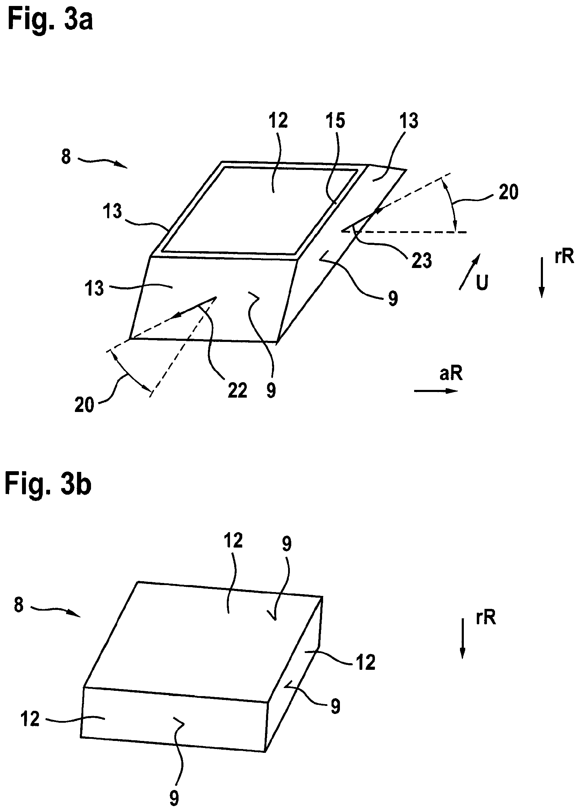

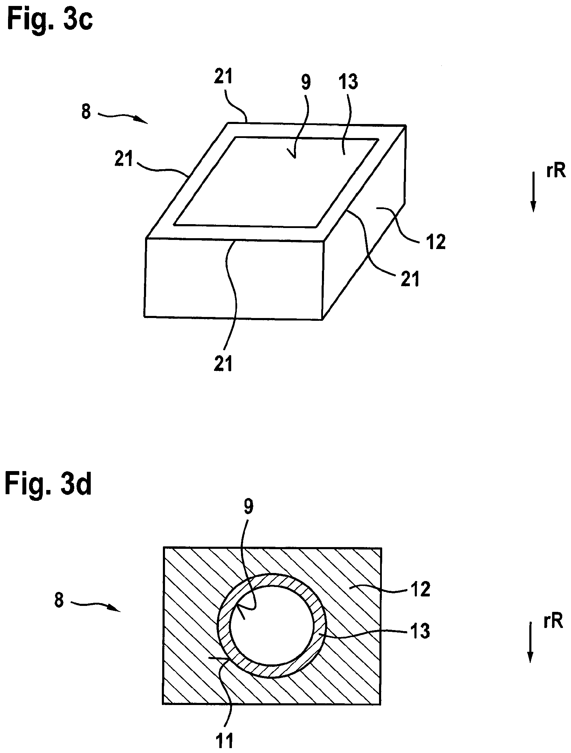

Die Figur 3 zeigt unterschiedliche Ausführungsbeispiele von Akustikelementen 8, welche für einen Fahrzeugluftreifen L wie in Fig. 1 gezeigt geeignet sind. Die Akustikelemente 8 eigenen sich auch für die Anbringung an einer Felge wie in Fig. 2 gezeigt. In diesem Fall weist die radiale Richtung in die entgegengesetzte Richtung.

Die dargestellten Akustikelemente 8 unterscheiden sich von dem in Figur 1 gezeigten Akustikelement 8 wie folgt:
Die Figur 3a zeigt einen Stumpf, dessen Seitenbereiche von einer Schicht 13 umgeben sind. Alle Normalenvektoren 22 der ersten Oberflächenbereiche 9 schließen einen Winkel 20 von maximal 45°, bevorzugt von maximal 30°, mit der Umfangrichtung ein. Alle Normalenvektoren 23 der ersten Oberflächenbereiche 9 schließen einen Winkel von maximal 45°, bevorzugt von maximal 30°, mit der axialen Richtung ein. Die Schicht 13 weist ein freies Ende 15 auf.

Die Figur 3b zeigt ein weitgehend quaderförmiges Akustikelement 8, wobei an der gesamten dem Reifeninnenraum 17 zugewandte Oberfläche des Körpers 12 die Schicht 9 angeordnet ist. Die Schicht 9 ist permeabel für Luft ausgebildet.

Die Figur 3c zeigt ein weiteres quaderförmiges Akustikelement 8, wobei der Körper 12 einen von Kanten 21 begrenzten , dem Reifeninnenraum 17 zugewandten Oberflächenbereich aufweist, wobei an dem Oberflächenbereich die Schicht 13 angeordnet ist. Die Schicht 13 erstreckt sich dabei über nur einen Teil des Oberflächenbereichs. Die Schicht 13 ist ganz beabstandet zu den Kanten 21 des Oberflächenbereichs angeordnet.

Die Figur 3d zeigt einen Querschnitt eines Akustikelements 8, wobei der Körper 12 eine durchgängige Öffnung 24 aufweist. An der die Öffnung 24 auskleidenden Oberfläche des Körpers 12 ist die Schicht 13 angeordnet.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtelverband
- 8: Akustikelement
- 9: erster Oberflächenbereich
- 10: innere Reifenoberfläche
- 11: gegenüberliegender Oberflächenbereich
- 12: Körper
- 13: Schicht
- 14: Haftmittel
- 15: freies Ende
- 16: Felge
- 17: Reifeninnenraum
- 18: innere Felgenoberfläche
- 19: Normalenvektor
- 20: Winkel
- 21: Kante
- 22: Normalenvektor
- 23: Normalenvektor
- 24: durchgängige Öffnung

- R: Fahrzeugrad
- L: Fahrzeugluftreifen
- aR: axiale Richtung
- rR: radiale Richtung
- U: Umfangsrichtung

## Patentansprüche

1. Fahrzeugluftreifen (L) aufweisend zumindest ein Akustikelement (8), wobei der Fahrzeugluftreifen (L) auf einer Felge (16) montiert mit der Felge (16) einen Reifeninnenraum (17) einschließt,
• wobei an einer den Reifeninnenraum (17) mitbegrenzenden inneren Reifenoberfläche (10) das Akustikelement (8) aufweisend einen Körper (12) und eine Schicht (13) angeordnet ist,
• wobei der Körper (12) an der inneren Reifenoberfläche (10) angeordnet ist,
• wobei an einem dem Reifeninnenraum (17) zugewandten Oberflächenbereich des Körpers (12) die Schicht (13) angeordnet ist,
• wobei die Schicht (13) an mindestens 15 %, bevorzugt an mindestens 20 %, besonders bevorzugt an mindestens 30%, der dem Reifeninnenraum (17) zugewandten Oberfläche des Körpers (12) angeordnet ist,
• wobei die Schicht (13) einen zur inneren Reifenoberfläche (10) beabstandet angeordneten ersten Oberflächenbereich (9) aufweist,
• wobei der erste Oberflächenbereich (9) mit einem ihm gegenüberliegenden Oberflächenbereich (11) der Schicht (13) luftverbindbar ist, wodurch eine luftdurchgängige Verbindung zwischen dem ersten Oberflächenbereich (9) und einem ihm gegenüberliegenden Oberflächenbereich (11) der Schicht (13) existiert, wodurch Luft vom ersten Oberflächenbereich (9) zum ihm gegenüberliegenden Oberflächenbereich (11) gelangen kann,
**dadurch gekennzeichnet, dass**
• die Schicht (13) für eine auf den ersten Oberflächenbereich (9) treffende Schallwelle einen Schall-Reflexionsgrad von mindestens 80 % aufweist, gemessen bei einer Referenzfrequenz f von f = c / ((R + r) · π), wobei R der nominale Reifendurchmesser und r der nominale Felgendurchmesser ist und c = 343 m/s gilt.

2. Fahrzeugluftreifen (L) nach Anspruch 1, **dadurch gekennzeichnet, dass** die Schicht (13) einen ersten Oberflächenbereich (9) aufweist, der dem Reifeninnenraum (17) zugewandt angeordnet ist und / oder einen ersten Oberflächenbereich (9) aufweist, der dem Körper (12) zugewandt angeordnet ist.

3. Fahrzeugluftreifen (L) nach einem oder mehreren der vorhergehenden Ansprüche, **dadurch gekennzeichnet, dass** die Schicht (13) für eine auf den ersten Oberflächenbereich (9) treffende Schallwelle der Referenzfrequenz f einen Schall-Reflexionsgrad von mindestens 90 %, bevorzugt von mindestens 95 %, besonders bevorzugt von mindestens 99 %, aufweist.

4. Fahrzeugluftreifen (L) nach einem oder mehreren der vorhergehenden Ansprüche, **dadurch gekennzeichnet, dass** das Akustikelement (8) und / oder die Schicht (13) zumindest im Bereich des ersten Oberflächenbereichs (9) eine Schallkennimpedanz von 0,8·10⁶ Ns/m³ bis 18·10⁶ Ns/m³ aufweist.

5. Fahrzeugluftreifen (L) nach einem oder mehreren der vorhergehenden Ansprüche, **dadurch gekennzeichnet, dass** die Schicht (13) zumindest im Bereich des ersten Oberflächenbereichs (9) eine Biegesteifigkeit von 100 Nm bis 6000 Nm, bevorzugt eine Biegesteifigkeit von 1000 Nm bis 6000 Nm, aufweist.

6. Fahrzeugluftreifen (L) nach einem oder mehreren der vorhergehenden Ansprüche, **dadurch gekennzeichnet, dass** das Akustikelement (8) bei einer Krafteinwirkung senkrecht auf den ersten Oberflächenbereich (9) eine Federkonstante von 100 N/m bis 20000 N/m aufweist.

7. Fahrzeugluftreifen (L) nach einem oder mehreren der vorhergehenden Ansprüche, **dadurch gekennzeichnet, dass** die Schicht (13) zumindest im Bereich des ersten Oberflächenbereichs (9) eine Biegesteifigkeit von 6·10⁻⁶ Nm bis 1·10⁻² Nm, bevorzugt von 6·10⁻⁶ Nm bis 1·10⁻⁴ Nm, aufweist.

8. Fahrzeugluftreifen (L) nach einem oder mehreren der vorhergehenden Ansprüche, **dadurch gekennzeichnet, dass** alle Normalenvektoren (19) des ersten Oberflächenbereichs (9) einen Winkel (20) kleiner als 90°, bevorzugt einen Winkel (20) von 0° bis 45°, besonders bevorzugt einen Winkel (20) von 0° bis 30°, mit der radialen Richtung (rR) einschließen.

9. Fahrzeugluftreifen (L) nach einem oder mehreren der vorhergehenden Ansprüche, **dadurch gekennzeichnet, dass** alle Normalenvektoren (22),(23) des ersten Oberflächenbereichs (9) einen Winkel (20) von 0° bis 45°, bevorzugt von 0° bis 30°, besonders bevorzugt von 0° bis 10°, mit der axialen Richtung (aR) oder der Umfangrichtung (U) einschließen.

10. Fahrzeugluftreifen (L) nach einem oder mehreren der vorhergehenden Ansprüche, **dadurch gekennzeichnet, dass** das Akustikelement (8) ein Dämpfungselement, welches aus einem porösen Material ausgebildet und zur Minderung von Geräuschen geeignet ist, aufweist.

11. Fahrzeugluftreifen (L) nach einem oder mehreren der vorhergehenden Ansprüche, **dadurch gekennzeichnet, dass** der Körper (12) einen von Kanten (21) begrenzten dem Reifeninnenraum (17) zugewandten Oberflächenbereich aufweist und dass an dem Oberflächenbereich die Schicht (13) angeordnet, bevorzugt ganz oder teilweise beabstandet zu den Kanten (21) angeordnet, ist.

12. Fahrzeugluftreifen (L) nach einem oder mehreren der vorhergehenden Ansprüche, **dadurch gekennzeichnet, dass** die Schicht (13) eine Schichtdicke von 0,01 mm bis 20 mm aufweist.

13. Fahrzeugluftreifen (L) nach einem oder mehreren der vorhergehenden Ansprüche, **dadurch gekennzeichnet, dass** die Schicht (13) eine Kunststofffolie oder eine Metallfolie, bevorzugt eine Aluminiumfolie, oder eine gewebeverstärkte Membran, oder eine Schicht aufweisend Naturmaterialien oder eine Schicht aufweisend Kohlefaser oder eine Schicht aufweisend Aramid oder eine ausgehärtete Beschichtung, oder ein Lack oder eine Schicht aus Gummi, bevorzugt eine Schicht aus Moosgummi, oder eine Beschichtung der Oberfläche des Körpers (13) oder eine unbehandelte Außenfläche des Körpers (13) ist.

14. Fahrzeugluftreifen (L) nach einem oder mehreren der vorhergehenden Ansprüche, **dadurch gekennzeichnet, dass** der erste Oberflächenbereich (9) in Umfangrichtung (U) geschlossen ausgebildet ist.

15. Felge (16) aufweisend zumindest ein Akustikelement (8), wobei ein auf der Felge (16) montierter Fahrzeugluftreifen (L) mit der Felge (16) einen Reifeninnenraum (17) einschließt,
• wobei an einer den Reifeninnenraum (17) mitbegrenzenden inneren Felgenoberfläche ein Akustikelement (8) aufweisend einen Körper (12) und eine Schicht (13) angeordnet ist,
• wobei der Körper (12) an der inneren Felgenoberfläche angeordnet ist und
• wobei an einem dem Reifeninnenraum (17) zugewandten Oberflächenbereich des Körpers (12) eine Schicht (13) angeordnet ist,
• wobei die Schicht (13) an mindestens 15 %, bevorzugt auf mindestens 20 %, besonders bevorzugt auf mindestens 30%, der dem Reifeninnenraum (17) zugewandten Oberfläche des Körpers (12) angeordnet ist,
• wobei die Schicht (13) einen zur inneren Felgenoberfläche beabstandet angeordneten ersten Oberflächenbereich (9) aufweist,
• wobei der erste Oberflächenbereich (9) mit einem ihm gegenüberliegenden Oberflächenbereich (11) der Schicht (13) luftverbindbar ist, wodurch eine luftdurchgängige Verbindung zwischen dem ersten Oberflächenbereich (9) und einem ihm gegenüberliegenden Oberflächenbereich (11) der Schicht (13) existiert, wodurch Luft vom ersten Oberflächenbereich (9) zum ihm gegenüberliegenden Oberflächenbereich (11) gelangen kann,
• **dadurch gekennzeichnet, dass**
• die Schicht (13) für eine auf den ersten Oberflächenbereich (9) treffende Schallwelle einen Schall-Reflexionsgrad von mindestens 80 % aufweist, gemessen bei einer Referenzfrequenz f von f = c / ((R + r) · π), wobei R der nominale Reifendurchmesser und r der nominale Felgendurchmesser ist und c = 343 m/s gilt.

## Claims

1. Pneumatic vehicle tyre (L) having at least one acoustic element (8), wherein the pneumatic vehicle tyre (L), fitted on a wheel rim (16), encloses with the wheel rim (16) a space inside the tyre (17),
• wherein the acoustic element (8) comprising a body (12) and a layer (13) is arranged on an inner tyre surface (10) involved in delimiting the space inside the tyre (17),
• wherein the body (12) is arranged on the inner tyre surface (10),
• wherein the layer (13) is arranged on a surface region of the body (12) that is facing the space inside the tyre (17),
• wherein the layer (13) is arranged on at least 15%, preferably on at least 20%, particularly preferably on at least 30%, of the surface of the body (12) that is facing the space inside the tyre (17),
• wherein the layer (13) has a first surface region (9) arranged at a distance from the inner tyre surface (10),
• wherein the first surface region (9) can be connected pneumatically to a surface region (11) of the layer (13) lying opposite it, whereby there is a connection through which air can pass between the first surface region (9) and a surface region (11) of the layer (13) lying opposite it, whereby air can pass from the first surface region (9) to the surface region (11) lying opposite it,
**characterized in that**
• the layer (13) has a sound reflectance of at least 80% for a sound wave striking the first surface region (9), measured at a reference frequency f of f = c / ((R + r) · π), where R is the nominal tyre diameter and r is the nominal rim diameter and c = 343 m/s.

2. Pneumatic vehicle tyre (L) according to Claim 1, **characterized in that** the layer (13) has a first surface region (9) which is arranged facing the space inside the tyre (17) and/or a first surface region (9) which is arranged facing the body (12).

3. Pneumatic vehicle tyre (L) according to one or more of the preceding claims, **characterized in that** the layer (13) has a sound reflectance of at least 90%, preferably of at least 95%, particularly preferably of at least 99%, for a sound wave of the reference frequency f striking the first surface region (9).

4. Pneumatic vehicle tyre (L) according to one or more of the preceding claims, **characterized in that** the acoustic element (8) and/or the layer (13) has at least in the region of the first surface region (9) a characteristic acoustic impedance of 0.8·10⁶ Ns/m³ to 18·10⁶ Ns/m³.

5. Pneumatic vehicle tyre (L) according to one or more of the preceding claims, **characterized in that** the layer (13) has at least in the region of the first surface region (9) a flexural stiffness of 100 Nm to 6000 Nm, preferably a flexural stiffness of 1000 Nm to 6000 Nm.

6. Pneumatic vehicle tyre (L) according to one or more of the preceding claims, **characterized in that** the acoustic element (8) under the effect of a force perpendicular to the first surface region (9) has a spring constant of 100 N/m to 20 000 N/m.

7. Pneumatic vehicle tyre (L) according to one or more of the preceding claims, **characterized in that** the layer (13) has at least in the region of the first surface region (9) a flexural stiffness of 6·10⁻⁶ Nm to 1·10⁻² Nm, preferably of 6·10⁻⁶ Nm to 1·10⁻⁴ Nm.

8. Pneumatic vehicle tyre (L) according to one or more of the preceding claims, **characterized in that** all of the normal vectors (19) of the first surface region (9) form an angle (20) of less than 90°, preferably an angle (20) of 0° to 45°, particularly preferably an angle (20) of 0° to 30°, with the radial direction (rR) .

9. Pneumatic vehicle tyre (L) according to one or more of the preceding claims, **characterized in that** all of the normal vectors (22), (23) of the first surface region (9) form an angle (20) of 0° to 45°, preferably of 0° to 30°, particularly preferably of 0° to 10°, with the axial direction (aR) or the circumferential direction (U).

10. Pneumatic vehicle tyre (L) according to one or more of the preceding claims, **characterized in that** the acoustic element (8) has a damping element, which is formed from a porous material and is suitable for reducing noises.

11. Pneumatic vehicle tyre (L) according to one or more of the preceding claims, **characterized in that** the body (12) has a surface region facing the space inside the tyre (17) that is delimited by edges (21) and **in that** the layer (13) is arranged on the surface region, preferably entirely or partially at a distance from the edges (21).

12. Pneumatic vehicle tyre (L) according to one or more of the preceding claims, **characterized in that** the layer (13) has a layer thickness of 0.01 mm to 20 mm.

13. Pneumatic vehicle tyre (L) according to one or more of the preceding claims, **characterized in that** the layer (13) is a plastic film or a metal film, preferably an aluminium film, or a fabric-reinforced membrane, or a layer comprising natural materials or a layer comprising carbon fibres or a layer comprising aramid or a cured coating, or a lacquer or a layer of rubber, preferably a layer of sponge rubber, or a coating of the surface of the body (13) or an untreated outer surface of the body (13).

14. Pneumatic vehicle tyre (L) according to one or more of the preceding claims, **characterized in that** the first surface region (9) is formed as closed in the circumferential direction (U).

15. Wheel rim (16) having at least one acoustic element (8), wherein a pneumatic vehicle tyre (L), fitted on the wheel rim (16), encloses with the wheel rim (16) a space inside the tyre (17),
• wherein an acoustic element (8) comprising a body (12) and a layer (13) is arranged on an inner rim surface involved in delimiting the space inside the tyre (17),
• wherein the body (12) is arranged on the inner rim surface and
• wherein a layer (13) is arranged on a surface region of the body (12) that is facing the space inside the tyre (17),
• wherein the layer (13) is arranged on at least 15%, preferably on at least 20%, particularly preferably on at least 30%, of the surface of the body (12) that is facing the space inside the tyre (17),
• wherein the layer (13) has a first surface region (9) arranged at a distance from the inner rim surface,
• wherein the first surface region (9) can be connected pneumatically to a surface region (11) of the layer (13) lying opposite it, whereby there is a connection through which air can pass between the first surface region (9) and a surface region (11) of the layer (13) lying opposite it, whereby air can pass from the first surface region (9) to the surface region (11) lying opposite it,
**characterized in that**
• the layer (13) has a sound reflectance of at least 80% for a sound wave striking the first surface region (9), measured at a reference frequency f of f = c / ((R + r) · π), where R is the nominal tyre diameter and r is the nominal rim diameter and c = 343 m/s.

## Revendications

1. Pneumatique de véhicule (L) comportant au moins un élément acoustique (8), le pneumatique de véhicule (L) étant monté sur une jante (16) et enfermant avec la jante (16) un espace intérieur de pneumatique (17),
• l'élément acoustique (8) qui comporte un corps (12) et une couche (13) étant disposé sur une surface de pneumatique intérieure (10) qui délimite conjointement l'espace de pneumatique intérieur (17),
• le corps (12) étant disposé sur la surface de pneumatique intérieure (10),
• la couche (13) étant disposée sur une zone de surface du corps (12) qui est tournée vers l'espace de pneumatique intérieur (17),
• la couche (13) étant disposée sur au moins 15 %, de préférence au moins 20 %, de manière particulièrement préférée au moins 30 %, de la surface du corps (12) qui est tournée vers l'espace de pneumatique intérieur (17),
• la couche (13) comportant une première zone de surface (9) disposée à distance de la surface de pneumatique intérieure (10),
• la première zone de surface (9) pouvant être reliée pneumatiquement à une zone de surface (11) de la couche (13) qui lui est opposée, de façon à établir une liaison perméable à l'air entre la première zone de surface (9) et une zone de surface (11) de la couche (13) qui lui est opposée de façon à ce que l'air puisse aller de la première zone surface (9) à la zone de surface (11) qui lui est opposée,
**caractérisé en ce que**
• la couche (13) présente, pour une onde sonore incidente à la première zone de surface (9), un taux de réflexion du son d'au moins 80 %, mesuré à une fréquence de référence f de f = c/ ((R+r)·π), R étant le diamètre nominal du pneumatique et r étant le diamètre nominal de la jante et c = 343 m/s.

2. Pneumatique de véhicule (L) selon la revendication 1, **caractérisé en ce que** la couche (13) comporte une première zone de surface (9) qui est disposée de manière à être tournée vers l'espace de pneumatique intérieur (17) et/ou comporte une première zone de surface (9) qui est disposée de manière à être tournée vers le corps (12).

3. Pneumatique de véhicule (L) selon une ou plusieurs des revendications précédentes, **caractérisé en ce que** la couche (13) présente un taux de réflexion du son d'au moins 90 %, de préférence d'au moins 95 %, de manière particulièrement préférée d'au moins 99 %, pour une onde sonore de fréquence de référence f incidente à la première zone surface (9).

4. Pneumatique de véhicule (L) selon une ou plusieurs des revendications précédentes, **caractérisé en ce que** l'élément acoustique (8) et/ou la couche (13) présentent au moins dans la région de la première zone de surface (9) une impédance acoustique caractéristique de 0,8·10⁶ Ns/m³ à 18·10⁶ Ns/m³.

5. Pneumatique de véhicule (L) selon une ou plusieurs des revendications précédentes, **caractérisé en ce que** la couche (13) présente au moins dans la région de la première zone de surface (9) une rigidité en flexion de 100 Nm à 6000 Nm, de préférence une rigidité en flexion de 1000 Nm à 6000 Nm.

6. Pneumatique de véhicule (L) selon une ou plusieurs des revendications précédentes, **caractérisé en ce que** l'élément acoustique (8) présente une constante de ressort de 100 N/m à 20000 N/m lorsqu'une force est appliquée perpendiculairement à la première zone de surface (9).

7. Pneumatique de véhicule (L) selon une ou plusieurs des revendications précédentes, **caractérisé en ce que** la couche (13) présente au moins dans la région de la première zone de surface (9) une résistance à la flexion de 6·10⁻⁶ Nm à 1·10⁻² Nm, de préférence de 6·10⁻⁶ Nm à 1·10⁻⁴ Nm.

8. Pneumatique de véhicule (L) selon une ou plusieurs des revendications précédentes, **caractérisé en ce que** tous les vecteurs normaux (19) de la première zone de surface (9) forment avec la direction radiale (rR) un angle (20) inférieur à 90°, de préférence un angle (20) de 0° à 45°, de manière particulièrement préférée un angle (20) de 0° à 30°.

9. Pneumatique de véhicule (L) selon une ou plusieurs des revendications précédentes, **caractérisé en ce que** tous les vecteurs normaux (22), (23) de la première zone de surface (9) forment avec la direction axiale (aR) ou la direction circonférentielle (U) un angle (20) de 0° à 45°, de préférence de 0° à 30°, de manière particulièrement préférée de 0° à 10°.

10. Pneumatique de véhicule (L) selon une ou plusieurs des revendications précédentes, **caractérisé en ce que** l'élément acoustique (8) comporte un élément amortisseur qui est formé d'un matériau poreux et qui est apte à réduire les bruits.

11. Pneumatique de véhicule (L) selon une ou plusieurs des revendications précédentes, **caractérisé en ce que** le corps (12) comporte une zone de surface qui est tournée vers l'espace de pneumatique intérieur (17) et qui est délimitée par des bords (21) et **en ce que** la couche (13) est disposée sur la zone de surface, de préférence entièrement ou partiellement à distance des bords (21).

12. Pneumatique de véhicule (L) selon une ou plusieurs des revendications précédentes, **caractérisé en ce que** la couche (13) a une épaisseur de couche de 0,01 mm à 20 mm.

13. Pneumatique de véhicule (L) selon une ou plusieurs des revendications précédentes, **caractérisé en ce que** la couche (13) est un film de matière synthétique ou une feuille métallique, de préférence une feuille d'aluminium, ou une membrane renforcée de tissu, ou une couche comportant des matériaux naturels ou une couche comportant des fibres de carbone ou une couche comportant de l'aramide ou un revêtement durci, ou une laque ou une couche de caoutchouc, de préférence une couche de caoutchouc mousse, ou un revêtement de la surface du corps (13) ou une surface extérieure non traitée du corps (13).

14. Pneumatique de véhicule (L) selon une ou plusieurs des revendications précédentes, **caractérisé en ce que** la première zone de surface (9) est conçue pour être fermée dans la direction circonférentielle (U).

15. Jante (16) comportant au moins un élément acoustique (8), un pneumatique de véhicule (L) monté sur la jante (16) enfermant conjointement avec la jante (16) un espace de pneumatique intérieur (17),
• un élément acoustique (8) qui comporte un corps (12) et une couche (13) étant disposé sur une surface de jante intérieure qui délimite conjointement l'espace de pneumatique intérieur (17),
• le corps (12) étant disposé sur la surface de jante intérieure et
• une couche (13) étant disposée sur une zone de surface du corps (12) qui est tournée vers l'espace de pneumatique intérieur (17),
• la couche (13) étant disposée sur au moins 15 %, de préférence sur au moins 20 %, de manière particulièrement préférée sur au moins 30 %, de la surface du corps (12) qui est tournée vers l'espace de pneumatique intérieur (17),
• la couche (13) comportant une première zone de surface (9) disposée à distance de la surface de jante intérieure,
• la première zone de surface (9) pouvant être reliée pneumatiquement à une zone de surface (11) de la couche (13) qui lui est opposée de façon à établir une liaison perméable à l'air entre la première zone de surface (9) et une zone de surface (11) de la couche (13) qui lui est opposée de manière à ce que l'air puisse aller de la première zone surface (9) à la zone de surface (11) qui lui est opposée,
• **caractérisée en ce que**
• la couche (13) présente, pour une onde sonore incidente à la première zone surface (9), un taux de réflexion du son d'au moins 80 %, mesuré à une fréquence de référence f de f = c/ ((R+r)·π), R étant le diamètre nominal du pneumatique et r étant le diamètre nominal de la jante et c = 343 m/s.
